Europäisches Patentamt

European Patent Office

Office européen des brevets

(11) Publication number: **0 326 305**
**A2**

## EUROPEAN PATENT APPLICATION

(21) Application number: 89300600.7

(22) Date of filing: 23.01.89

(51) Int. Cl.4: **A01N 43/12** , //(A01N43/12, 37:18,37:22,43:08,43:56,43:78, 43:90,47:12,47:36)

(30) Priority: 26.01.88 GB 8801676
26.01.88 GB 8801677
26.01.88 GB 8801678
26.01.88 GB 8801679
26.01.88 GB 8801680
26.01.88 GB 8801681
26.01.88 GB 8801682
26.01.88 GB 8801683

(43) Date of publication of application:
02.08.89 Bulletin 89/31

(84) Designated Contracting States:
ES GR IT

(71) Applicant: SCHERING AKTIENGESELLSCHAFT
Berlin und Bergkamen
Müllerstrasse 170/178 Postfach 65 03 11
D-1000 Berlin 65(DE)

(72) Inventor: Rees, Richard Tudor
Speerweg 8
D-1000 Berlin 28(DE)

(74) Representative: Waldman, Ralph David
Schering Agrochemicals Limited Industrial
Property Department Chesterford Park
Research Station
Saffron Walden Essex CB10 1XL(GB)

(54) **Benfuresate mixtures.**

(57) The herbicidal activity of benfuresate is improved by the addition of a herbicide selected from bensulfuron-methyl, pyrazosulfuron-ethyl, pyrazoxyfen, benzophenap, pyrazolate, esprocarb, bromobutide, furyloxyfen, pretilachlor, cinmethylin and mefanacet.

EP 0 326 305 A2

## Benfuresate Mixtures

This invention relates to herbicidal compositions and to a method of selectively controlling weeds in crops.

The present invention provides a herbicidal composition comprising
  a) benfuresate and
  b) a herbicide selected from
      (i) bensulfuron-methyl,
      (ii) pyrazosulfuron-ethyl,
      (iii) pyrazoxyfen,
      (iv) benzophenap,
      (v) pyrazolate,
      (vi) esprocarb,
      (vii) bromobutide,
      (viii) furyloxyfen,
      (ix) pretilachlor,
      (x) cinmethylin and
      (xi) mefenacet.

Benfuresate is the common name for the herbicide having the chemical name 2,3-dihydro-3,3-dimethylbenzofuran-5-yl ethanesulphonate.

Of the component (b),
(i) bensulfuron-methyl is the common name for methyl α-[3-(4,6-dimethoxypyrimidin-2-yl)ureido-sulphamoyl]-o-toluate;
(ii) pyrazosulfuron-ethyl is the common name for ethyl 5-(4,6-dimethoxypyrimidin-2-ylcarbamoyl-sulphamoyl)-1-methylpyrazole-4-carboxylate;
(iii) pyrazoxyfen is the common name for 2-[4-(2-4-dichlorobenzoyl)-1,3-dimethylpyrazol-5-yloxy]-acetophenone;
(iv) benzophenap is the common name for 2-[4-(2-4-dichloro-m-toluoyl)-1,3-dimethylpyrazol-5-yloxy]-4'-methylacetophenone;
(v) pyrazolate is the common name for 4-(2,4-dichloro-benzoyl)-1,3-dimethylpyrazol-5-yl p-toluene-sulphonate;
(vi) esprocarb is the common name for S-benzyl 1,2-dimethylpropyl(ethyl)thiocarbamate;
(vii) bromobutide is the common name for 2-bromo-3,3-dimethyl-N-(1-methyl-1-phenylethyl)-butaneamide;
(viii) furyloxyfen is the common name for 5-(2-chloro-α,α,α-trifluoro-p-tolyloxy)-2-nitrophenyl tetrahydro-3-furyl ether;
(ix) pretilachlor is the common name for 2-chloro-N-(2,6-diethyl-N-2-propoxyethyl)acetanilide;
(x) cinmethylin is the common name for rel-(1R,2S,4S)-1,4-epoxy-p-menth-2-yl 2-methylbenzyl ether; and
(xi) mefenacet is the common name for 2-(2-benzothiazolyloxy)-N-methyl-N-phenylacetamide.

The invention also provides a method of controlling weeds which comprises applying to their weeds or their locus, components (a) and (b), either together or in sequence.

The invention is generally applicable in controlling weeds in a variety of growing crops but especially in rice and particularly paddy rice. However the mixtures may be applied to other crops, especially plantation crops, such as orchards, and cotton.

It has been found that unexpected advantages may be obtained by using component (a) in conjunction with component (b). Thus the mixtures given better weed control than the individual components and a synergistic response is often observed.

The weight ratio of component (a) to component (b) can vary over wide ranges. Suitable ranges of (a) to (b) are as follows with the preferred ranges in brackets. Suitable rates of application of (b) are also given with preferred rates in brackets.

| Component (b) | Ratio ranges (a:b) | Rate of application of (b) (kg/ha) |
|---|---|---|
| (i) | 100:1 to 1:1 (25:1 to 5:1) | 0.01-0.2 |
| (ii) | 2:1 to 1:5 (1:1 to 1:3) | 0.5-3 |
| (iii) | 2:1 to 1:100 (1:1 to 1:10) | 0.5-3 |
| (iv) | 2:1 to 1:50 (1:1 to 1:3) | 0.5-3 |
| (v) | 10:1 to 1:30 (1:1 to 1:100) | 0.5-3 |
| (vi) | 2:1 to 1:100 (1:1 to 1:10) | 0.5-3 |
| (vii) | 5:1 to 1:5 (3:1 to 1:3) | 0.5-3 |
| (viii) | 2:1 to 1:100 (1:1 to 1:80) | 0.2-2 |
| (ix) | 2:1 to 1:100 (1:1 to 1:10) | 0.5-4 |
| (x) | 2:1 to 1:100 (1:1 to 1:10) | 0.01-3 |
| (xi) | 2:1 to 1:100 (1:1 to 1:10) | 0.5-5 |

A wide variety of grassy and broad-leaved weeds may be controlled by the mixtures of the invention. The invention is particularly suitable for controlling the notoriously difficult Cyperus species, e.g. C. esculentus, C. serotinus, C. iria and C. difformis. Other weeds that can be controlled include Echinochloacrus-galli, Eleocharis kuroguwai Scirpus spp., e.g. Scirpus juncoides, and Sagittaria spp.

If desired the compositions may include other suitable herbicides, e.g. to broaden the spectrum. Examples of such herbicides includes, phenoxyalkanoic acids, e.g. mecoprop, MCPA and MCPB, triazines, e.g. simetryn and dimethametryn, acetanilides, e.g. butachlor, thiocarbamates, e.g. molinate and thiobencarb, and bentazone.

The mixture of active herbicides can be applied by conventional manner for herbicides and usually by a spray treatment.

In addition to tank mixing immediately prior to use the compositions containing (a) and (b) may be formulated into more concentrated primary compositions which are usually diluted with water just before use. Such compositions usually comprise one or more surface active agents. Examples of such compositions are as follows.

It can be a dispersible solution which comprises the active ingredients dissolved in a water-miscible solvent with the addition of a dispersing agent. Alternatively it can comprise the ingredients in the form of a finely ground power in association with a dispersing agent and intimately mixed with water to give a paste or cream which can if desired be added to an emulsion of oil in water to give a dispersion of active ingredients in an aqueous oil emulsion.

As emulsifiable concentrate comprises the active ingredient dissolved in a water-immiscible solvent which is formed into an emulsion with water in the presence of an emulsifying agent.

A granular solid comprises the active ingredients associated with power diluents such as kaolin, which mixture is granulated by known methods. Alternatively it comprises the active ingredients adsorbed or adsorbed on a pre-granular diluent, for example Fuller's earth, attapulgite or limestone grit.

A dispersible or wettable powder usually comprises the active ingredients in admixture with a suitable surfactant and an inert powder diluent such as china clay.

Another suitable concentrate is a flowable suspension concentrate which is formed by grinding the active ingredients with water, a wetting agent and a suspending agent.

In some circumstances it may be desirable to combine two types of formulation e.g. one of the components is present in an emulsifiable concentrate and the second component is dispersed as a powder in this concentrate.

The above herbicidal formulations are to be regarded as part of the invention. The total concentration of the active components in a composition for direct application to the crop by conventional ground methods is preferably within the range of 0.02 to 1 per cent by weight, of the composition, but more concentrated compositions containing, for example up to 20 per cent may be desirable.

In a primary composition the total amount of active compound can vary widely, for example, from 5 to 95 per cent by weight.

The invention is illustrated in the following Examples, which describe experiments in which a synergistic effect was observed.

Example 1

3

Seeds or vegetative plant root material of various seed species, were sown or transplanted into pots. Aqueous suspensions of benfuresate (BE), herbicides (i) to (vi) and mixtures thereof, at various concentrations, were applied to the plants at the leaf stage indicated. Plants were then kept under control environment conditions suitable for maintaining plant growth. Three weeks after application, control of the weeds was assessed. To indicate the existence of synergism between the active components the results were treated in the manner described by Colby S.R., "Calculating Synergistic and Antagonistic Responses of Herbicide Combinations" in Weeds 1967 15, 20-22). In this method the "expected" percent control, E, of the combination is given by the equation.

$$E = X + Y - \frac{XY}{100}$$

in which

X = the percentage of control with substance A at a given rate (p),

Y = the percentage of control with substance B at a given rate (q), and

E = expected control by A + B at a rate p + q.

If the observed control of the mixture is greater than E the results indicate synergism. Synergism was exhibited as follows.

## (i) BENSULFURON METHYL (BM)

| a) Echinochloa crus-galli (sprayed at leaf stage 1) | | | |
|---|---|---|---|
| Treatment | Rate (ppm) | % control | |
| | | Observed | Expected (E) |
| BE | 1.0 | 0 | |
| | 3.0 | 12 | |
| BM | 0.03 | 0 | |
| | 0.1 | 0 | |
| | 0.3 | 0 | |
| | 1.0 | 0 | |
| BE + BM | 1.0 + 1.0 | 29 | 0 |
| | 3.0 + 0.03 | 34 | 12 |
| | 3.0 + 0.1 | 34 | 12 |
| | 3.0 + 0.3 | 34 | 12 |
| | 3.0 + 1.0 | 44 | 12 |

| b) Cyperus difformis (sprayed at leaf stage 1-2) | | | |
|---|---|---|---|
| Treatment | Rate (ppm) | % control | |
| | | Observed | Expected (E) |
| BE | 1.0 | 23 | |
| | 3.0 | 65 | |
| BM | 0.3 | 72 | |
| | 1.0 | 88 | |
| BE + BM | 1.0 + 1.3 | 85 | 78 |
| | 1.0 + 1.0 | 100 | 91 |
| | 3.0 + 0.3 | 92 | 90 |
| | 3.0 + 1.0 | 100 | 96 |

| c) Sagittaria spp. (sprayed at leaf stage 1-2) | | | |
|---|---|---|---|
| Treatment | Rate (ppm) | % control | |
| | | Observed | Expected (E) |
| BE | 1.0 | 15 | |
| | 3.0 | 17 | |
| BM | 0.03 | 33 | |
| | 0.1 | 45 | |
| BE + BM | 1.0 + 0.1 | 67 | 53 |
| | 3.0 + 0.03 | 67 | 44 |
| | 3.0 + 0.1 | 75 | 54 |

(ii) PYRAZOSULFURON-ETHYL (PE)

| a) Echinochloa crus-galli (sprayed at leaf stage 1) | | | |
|---|---|---|---|
| Treatment | Rate (ppm) | % control | |
| | | Observed | Expected (E) |
| BE | 1.0 | 0 | |
| | 3.0 | 25 | |
| BM | 0.01 | 0 | |
| | 0.03 | 0 | |
| BE + PE | 1.0 + 0.03 | 10 | 0 |
| | 3.0 + 0.01 | 40 | 25 |
| | 3.0 + 0.03 | 50 | 25 |

| b) Scirpus juncoides (sprayed at leaf stage 1-2) | | | |
|---|---|---|---|
| Treatment | Rate (ppm) | % control | |
| | | Observed | Expected (E) |
| BE | 10 | 80 | |
| PE | 0.03 | 45 | |
| BE + PE | 10 + 0.03 | 100 | 89 |

5

| c) Sagittaria spp. (sprayed at leaf stage 1-2) | | | |
|---|---|---|---|
| Treatment | Rate (ppm) | % control | |
| | | Observed | Expected (E) |
| BE | 1.0 | 0 | |
| | 3.0 | 15 | |
| | 10.0 | 40 | |
| PE | 0.01 | 0 | |
| | 0.03 | 5 | |
| BE + PE | 1.0 + 0.03 | 20 | 5 |
| | 3.0 + 0.01 | 20 | 15 |
| | 3.0 + 0.03 | 30 | 19 |
| | 10.0 + 0.01 | 75 | 40 |
| | 10.0 + 0.03 | 93 | 43 |

(iii) PYRAZOXYFEN (PF)

| a) Echinochloa crus-galli (sprayed at leaf stage 1) | | | |
|---|---|---|---|
| Treatment | Rate (ppm) | % control | |
| | | Observed | Expected (E) |
| BE | 0.3 | 5 | |
| | 1.0 | 15 | |
| | 3.0 | 60 | |
| PF | 10 | 0 | |
| | 30 | 0 | |
| BE + PF | 0.3 + 10 | 45 | 33.5 |
| | 0.3 + 30 | 80 | 71.5 |
| | 1.0 + 10 | 54 | 40.5 |
| | 1.0 + 30 | 90 | 74.5 |
| | 3.0 + 10 | 100 | 72 |
| | 3.0 + 30 | 100 | 88 |

| b) Cyperus difformis (sprayed at leaf stage 1-2) | | | |
|---|---|---|---|
| Treatment | Rate (ppm) | % control | |
| | | Observed | Expected (E) |
| BE | 0.3 | 15 | |
| | 1.0 | 30 | |
| PF | 10.0 | 70 | |
| BE + PF | 0.3 + 10.0 | 85 | 74.5 |
| | 1.0 + 10.0 | 95 | 79 |

(iv) BENZOPHENAP (BP)

6

| Cyperus serotinus (sprayed at leaf stage 1-2) | | | |
|---|---|---|---|
| Treatment | Rate (ppm) | % control | |
| | | Observed | Expected (E) |
| BE | 1.0 | 20 | |
| BP | 30.0 | 35 | |
| BE + BP | 1.0 + 30.0 | 70 | 48 |

(v) PYRAZOLATE (PL)

| a) Scirpus juncoides (sprayed at leaf stage 1-2) | | | |
|---|---|---|---|
| Treatment | Rate (ppm) | % control | |
| | | Observed | Expected (E) |
| BE | 0.3 | 3 | |
| | 1.0 | 20 | |
| PL | 3.0 | 8 | |
| | 10.0 | 60 | |
| BE + PL | 0.3 + 3.0 | 30 | 11 |
| | 0.3 + 10.0 | 65 | 61 |
| | 1.0 + 3.0 | 50 | 26 |
| | 1.0 + 10.0 | 75 | 68 |

| b) Eleocharis acicularis (sprayed when 1 cm high) | | | |
|---|---|---|---|
| Treatment | Rate (ppm) | % control | |
| | | Observed | Expected (E) |
| BE | 1.0 | 55 | |
| | 3.0 | 80 | |
| PL | 1.0 | 0 | |
| | 3.0 | 0 | |
| | 10.0 | 20 | |
| BE + PL | 1.0 + 1.0 | 60 | 55 |
| | 1.0 + 3.0 | 68 | 55 |
| | 1.0 + 10.0 | 83 | 64 |
| | 3.0 + 1.0 | 84 | 80 |
| | 3.0 + 3.0 | 85 | 80 |
| | 3.0 + 10.0 | 93 | 84 |

| c) Cyperus iria (sprayed at leaf stage 1-2) | | | |
|---|---|---|---|
| Treatment | Rate (ppm) | % control | |
| | | Observed | Expected (E) |
| BE | 0.3 | 65 | |
| PL | 0.3 | 23 | |
| BE + PL | 0.3 + 0.3 | 100 | 73 |

| d) Monochoria vaginalis (sprayed at leaf stage 1-2) | | | |
|---|---|---|---|
| Treatment | Rate (ppm) | % control | |
| | | Observed | Expected (E) |
| BE | 0.3 | 0 | |
| | 1.0 | 3 | |
| PL | 3.0 | 30 | |
| | 10.0 | 33 | |
| BE + PL | 0.3 + 3.0 | 33 | 30 |
| | 0.3 + 10.0 | 40 | 33 |
| | 1.0 + 3.0 | 38 | 31 |
| | 1.0 + 10.0 | 55 | 35 |

8

e) <u>Scirpus juncoides</u>. (Assessment carried out 24 days after planting)

| Treatment | Rate (kg/ha) | % control | |
|-----------|--------------|-----------|---|
| | | Observed | Expected (E) |
| BE | 0.063 | 14 | |
| | 0.125 | 35 | |
| | 0.25 | 45 | |
| | 0.5 | 51 | |
| | 1.0 | 76 | |
| | 2.0 | 80 | |
| | 4.0 | 94 | |
| PL | 1.0 | 72 | |
| | 2.0 | 76 | |
| | 4.0 | 88 | |
| | 6.0 | 95 | |
| BE+PL | 0.063 + 1.0 | 78 | 76 |
| | 0.063 + 2.0 | 90 | 80 |
| | 0.063 + 4.0 | 96 | 90 |
| | 0.063 + 6.0 | 100 | 96 |
| | 0.125 + 1.0 | 84 | 82 |
| | 0.125 + 2.0 | 98 | 92 |
| | 0.125 + 4.0 | 98 | 92 |
| | 0.125 + 6.0 | 100 | 97 |
| | 0.25 + 1.0 | 88 | 85 |
| | 0.25 + 2.0 | 94 | 87 |
| | 0.25 + 4.0 | 100 | 94 |
| | 0.25 + 6.0 | 100 | 98 |
| | 0.5 + 1.0 | 89 | 87 |
| | 0.5 + 2.0 | 95 | 88 |
| | 0.5 + 4.0 | 100 | 94 |
| | 0.5 + 6.0 | 100 | 98 |

9

| Treatment | Rate (kg/ha) | % control | |
|---|---|---|---|
| | | Observed | Expected (E) |
| BE+PL | 1.0 + 1.0 | 92 | 93 |
| | 1.0 + 2.0 | 99 | 94 |
| | 1.0 + 4.0 | 100 | 97 |
| | 1.0 + 6.0 | 100 | 99 |
| | 2.0 + 1.0 | 100 | 94 |
| | 2.0 + 2.0 | 100 | 94 |
| | 2.0 + 4.0 | 100 | 98 |
| | 2.0 + 6.0 | 100 | 99 |
| | 4.0 + 1.0 | 100 | 98 |
| | 4.0 + 2.0 | 100 | 98 |
| | 4.0 + 4.0 | 100 | 99 |
| | 4.0 + 6.0 | 100 | 99 |

(vi) ESPROCARB (ES)

| a) Echinochloa crus-galli (sprayed at leaf stage 1) | | | |
|---|---|---|---|
| Treatment | Rate (ppm) | % control | |
| | | Observed | Expected (E) |
| BE | 3.0 | 25 | |
| ES | 10.0 | 5 | |
| | 30.0 | 5 | |
| BE + ES | 3.0 + 10.0 | 60 | 29 |
| | 3.0 + 30.0 | 80 | 29 |

| b) Echinochloa colonum (sprayed at leaf stage 1-2) | | | |
|---|---|---|---|
| Treatment | Rate (ppm) | % control | |
| | | Observed | Expected (E) |
| BE | 0.3 | 0 | |
| | 1.0 | 40 | |
| | 3.0 | 75 | |
| ES | 10.0 | 0 | |
| | 30.0 | 10 | |
| BE + ES | 0.3 + 10.0 | 15 | 0 |
| | 0.3 + 30.0 | 20 | 19 |
| | 1.0 + 30.0 | 55 | 46 |
| | 3.0 + 30.0 | 85 | 70 |

| c) Cyperus iria (sprayed at leaf stage 1-2) | | | |
|---|---|---|---|
| Treatment | Rate (ppm) | % control | |
| | | Observed | Expected (E) |
| BE | 0.3 | 5 | |
| | 1.0 | 20 | |
| ES | 10.0 | 0 | |
| | 30.0 | 0 | |
| BE + ES | 0.3 + 10.0 | 30 | 5 |
| | 0.3 + 30.0 | 25 | 5 |
| | 1.0 + 10.0 | 65 | 20 |
| | 1.0 + 30.0 | 65 | 20 |

(vii) BROMOBUTIDE (BB)

| a) Echinochloa crus-galli (sprayed at leaf stage 1) | | | |
|---|---|---|---|
| Treatment | Rate (ppm) | % control | |
| | | Observed | Expected (E) |
| BE | 1.0 | 0 | |
| | 3.0 | 25 | |
| BB | 1.0 | 0 | |
| | 3.0 | 25 | |
| BE + BB | 1.0 + 1.0 | 5 | 0 |
| | 1.0 + 3.0 | 30 | 25 |
| | 3.0 + 1.0 | 30 | 25 |
| | 3.0 + 3.0 | 83 | 44 |

11

| b) Echinochloa colonum (sprayed at leaf stage 1) | | | |
|---|---|---|---|
| Treatment | Rate (ppm) | % control | |
| | | Observed | Expected (E) |
| BE | 1.0 | 5 | |
| | 3.0 | 90 | |
| BB | 1.0 | 5 | |
| | 3.0 | 10 | |
| BE + BB | 1.0 + 1.0 | 90 | 8 |
| | 1.0 + 3.0 | 99 | 15 |
| | 3.0 + 1.0 | 98 | 91 |
| | 3.0 + 3.0 | 98 | 91 |

(viii) FURYLOXYFEN (FL)

| Sagittaria spp. (sprayed at leaf stage 1-2) | | | |
|---|---|---|---|
| Treatment | Rate (ppm) | % control | |
| | | Observed | Expected (E) |
| BE | 0.3 | 0 | |
| FL | 20.0 | 70 | |
| BE + FL | 0.3 + 20.0 | 82 | 70 |

(ix) PRETILACHLOR (PR)

| a) Echinochloa crus-galli (sprayed at leaf stage 1) | | | |
|---|---|---|---|
| Treatment | Rate (ppm) | % control | |
| | | Observed | Expected (E) |
| BE | 0.3 | 0 | |
| | 1.0 | 10 | |
| | 3.0 | 93 | |
| PR | 3.0 | 70 | |
| BE + PR | 0.3 + 3.0 | 98 | 70 |
| | 1.0 + 3.0 | 98 | 73 |
| | 3.0 + 3.0 | 100 | 98 |

| b) Cyperus difformis (sprayed at leaf stage 1-2) | | | |
|---|---|---|---|
| Treatment | Rate (ppm) | % control | |
| | | Observed | Expected (E) |
| BE | 0.3 1.0 | 5 30 | |
| PR | 3.0 10.0 | 50 88 | |
| BE + PR | 0.3 + 3.0 0.3 + 10.0 1.0 + 3.0 1.0 + 10.0 | 60 75 88 85 | 52 67 65 75 |

## (x) CINMETHYLIN (CM)

| Monochoria vaginalis (sprayed at leaf stage 1-2) | | | |
|---|---|---|---|
| Treatment | Rate (ppm) | % control | |
| | | Observed | Expected (E) |
| BE | 0.3 1.0 3.0 | 0 0 0 | |
| CM | 3.0 10.0 | 45 60 | |
| BE + CM | 0.3 + 3.0 0.3 + 10.0 1.0 + 3.0 1.0 + 10.0 3.0 + 3.0 3.0 + 10.0 | 48 75 55 79 58 85 | 45 60 45 60 45 60 |

## (xi) MEFENACET (MF)

| Scirpus juncoides (sprayed at leaf stage 1-2) | | | |
|---|---|---|---|
| Treatment | Rate (ppm) | % control | |
| | | Observed | Expected (E) |
| BE | 0.3 | 0 | |
| MF | 3.0 10.0 | 60 70 | |
| BE + MF | 0.3 + 3.0 0.3 + 10.0 | 70 82.5 | 60 70 |

**Claims**

1) A herbicidal composition comprising
   a) benfuresate and
   b) a herbicide selected from
(i) bensulfuron-methyl,
(ii) pyrazosulfuron-ethyl,
(iii) pyrazoxyfen,
(iv) benzophenap,
(v) pyrazolate,
(vi) esprocarb,
(vii) bromobutide,
(viii) furyloxyfen,
(ix) pretilachlor,
(x) cinmethylin and
(xi) mefenacet.

2) A method of controlling weeds which comprises applying to the weeds or their locus,
   a) benfuresate and
   b) a herbicide selected from
(i) bensulfuron-methyl,
(ii) pyrazosulfuron-ethyl,
(iii) pyrazoxyfen,
(iv) benzophenap,
(v) pyrazolate,
(vi) esprocarb,
(vii) bromobutide,
(viii) furyloxyfen,
(ix) pretilachlor,
(x) cinmethylin and
(xi) mefenacet.